# EUROPEAN PATENT SPECIFICATION

(11) **EP 0 712 196 B1**
(45) Date of publication and mention of the grant of the patent: **03.12.1997**
(21) Application number: 95307782.3
(22) Date of filing: 01.11.1995
(51) Int. Cl.: H02K 5/167, F16N 39/02, H02K 9/19

(54) **A lubrication system for an electric apparatus journalled by means of sliding bearings**
Schmierungsanlage für ein elektrisches Gerät gelagert mit Gleitlager
Système de graissage pour un appareil électrique avec des paliers glisse

(30) Priority: 10.11.1994 FI 945295
(43) Date of publication of application: 15.05.1996
(73) Proprietor: ABB Industry Oy, 00380 Helsinki (FI)
(72) Inventor: Ikonen, Janne P., FIN-00570 Helsinkie (FI)
(74) Representative: Newby, Martin John

(56) References cited:
- DE-A- 3 838 668
- GB-A- 197 014
- US-A- 2 817 027
- US-A- 2 836 471
- PATENT ABSTRACTS OF JAPAN vol. 017 no. 035 (E-1310) ,22 January 1993 & JP-A-04 255447 (TOSHIBA CORP) 10 September 1992,

## Description

The present invention relates to a lubrication system for an electric apparatus journalled by means of slide bearings. To be more specific, the invention relates to an electric apparatus comprising an end N at which is located a fan and an end D at which is located a shaft, and a rotor, one end of which is journalled by means of a first slide bearing at the end N, and the opposite end of which is journalled by means of a second slide bearing at the end D, the end N being provided with a first bearing housing with an oil sump for the first slide bearing, and the end D being provided with a second bearing housing with an oil sump for the second slide bearing.

Electric apparatuses of the described type are largely known. As rotational speed or ambient temperature increases, the warming up of electric apparatuses may cause problems. The temperatures of the slide bearings may rise too high for the operation of the bearings, for which limits are set regarding the highest operating temperatures of the bearings. The heating of the bearings results from transference of the heat originating from, the rotor to the bearings and from bearing friction. Even if each bearing comprises an oil scraper ring, the latter is not sufficiently capable of lifting colder oil from the lower part of the oil sump to the bearing area to efficiently cool the bearing. In a rib cooled electric apparatus, the problem is further aggravated by cooling air passing from the end N to the end D between the ribs and past the bearing located at the end D. The cooling air leaving the end N is thus warmed by the cooling ribs while progressing towards the end D, and thus the cooling capacity of the cooling air essentially deteriorates before it reaches the bearing at the end D. For the reasons mentioned, the difference in temperature between the bearing applications of the end D and the end N is significant.

Experiments have shown, for example, that for a rib cooled, squirrel-cage 60 Hz, 2-pole, 300kW motor having a rotational speed of 3577 revolutions per minute, the highest temperature in the bearing at end D was 78.5 °C when operating at an ambient temperature of 23.5 °C. Thus the end D was heated 55°C above the ambient temperature. The maximum warming up specified for the motor was 50°C and this value was thus exceeded. Correspondingly, the end N was heated by 39.4 °C. The difference between the bearing temperature at end D and at end N was 15.6 °C.

The object of the present invention is to provide a lubrication system for an electric apparatus journalled by sliding bearings, which lubrication system cools the sliding bearings of the electric apparatus more efficiently than heretofore as a result of which the electric apparatus can be operated at temperatures higher than heretofore and/or the rotational speed can be increased without the bearings overheating.

To implement this object with free circulation of the oil, there is provided electrical apparatus as claimed in the ensuing claim 1.

Preferred embodiment of the free circulation version are disclosed in the appended claims 2-4.

To implement the object of the present invention with forced circulation of the oil, there is provided electrical apparatus as claimed in the ensuing claim 5.

Preferred embodiments of the forced circulation version are disclosed in the appended claims 6-9.

Thus, the oil circulation can be implemented with either free or forced circulation within the scope of the invention. The invention is based on the idea of transferring oil between the bearing housings so that relatively hot oil is transferred to a region containing relatively cold oil, and relatively cold oil is transferred to a region containing relatively hot oil, whereby the differences in temperature of the oil in different parts of the lubrication system are evened out resulting in efficient cooling in the critical parts of the apparatus, which are generally inefficiently cooled. The greatest advantage of electric apparatus according to the invention is that the heating effect of the slide bearing at the end D can be reduced, as a result of which the rotational speed of the electric apparatus can be increased and/or the electric apparatus can be operated in ambient temperatures higher than heretofore. A further advantage of the invention is that it can be applied to existing electric apparatuses by performing minor modifications thereto.

In the following, the invention will be described in more detail by means of two preferred embodiments with reference to the accompanying drawing, in which:
Figure 1 shows an embodiment of the invention, wherein free circulation of the lubricant is applied;
Figure 2 shows the electric apparatus of Figure 1 as seen from one end; and
Figure 3 shows a second embodiment of the invention, wherein forced circulation of the lubricant is applied.

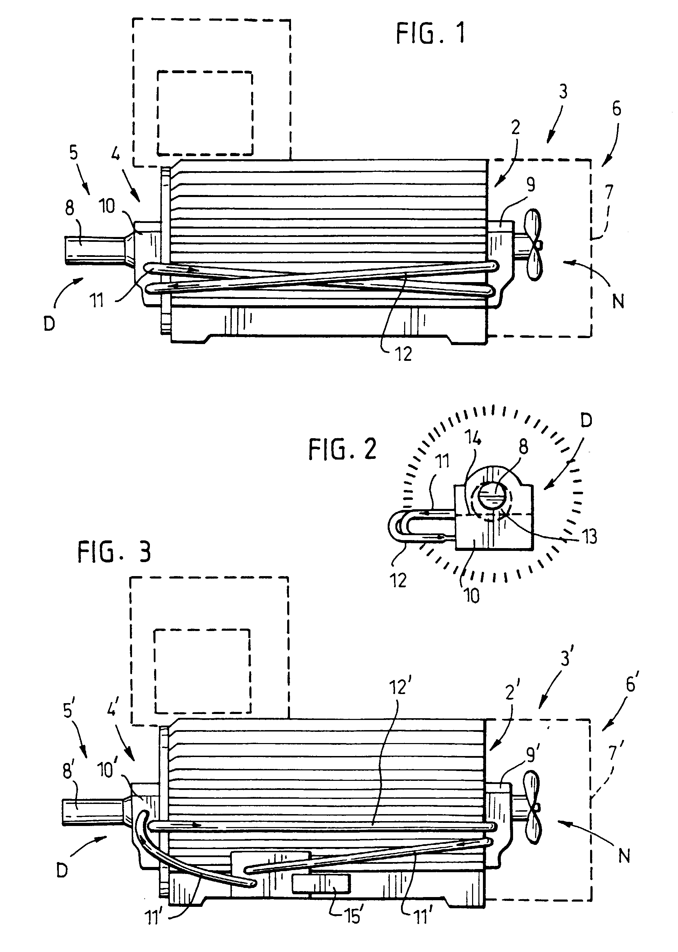

The electric motor shown in Figure 1 comprises a ribbed frame 1 within which is located a rotor journalled by means of a first slide or sliding bearing 2 at the end N or 3 of the motor, and by means of a second slide or sliding bearing 4 at the end D or 5 of the motor. At the end N is provided a fan 6 for blowing cooling air to the end D. A housing 7 of the fan is indicated by a dotted line. A rotor shaft 8 is provided at the end D. The rotational direction of the rotor is such that as seen from the end of the shaft 8, the shaft rotates clockwise.

The first bearing 2 provided at the end N is located within a bearing housing 9. Correspondingly, the second bearing 4 is located within a bearing housing 10. The bearing housings 9, 10 each enclose an oil sump, the oil contained in the oil sumps lubricating and cooling the bearings 2, 4. The bearings 2, 4 are of such a type that they each comprise an oil scraper ring, which feeds oil into the space between the bearing and the rotor shaft. In Figure 2, an oil scraper ring 13 is indicated by a dotted line, and so is the level 14 of oil in the oil sump. The housing 7 is provided with a monitoring window (not shown in the figure), through which the oil level of the oil sump can be observed.

As the electric motor rotates, the end D, which is located furthest from the fan 6, warms more than the end N. The oil located close to the oil level 14 of the oil sump of the bearing 4 and which is located near the shaft 8, warms the most. The oil located in the proximity of the bottom of the bearing housing 10 warms significantly less. Correspondingly, at the end N, the oil located close to the oil level of the oil sump of the bearing 2, which oil is located near the rotor shaft, warms more than the oil located in the proximity of the bottom of the bearing housing 9. In order to reduce the temperature of the oil at the end D and to reduce the differences in temperature, the electric motor comprises a first oil pipe 11 and a second oil pipe 12, each of which pipes connects the oil sumps of the bearing housings 9, 10 to each other. The oil pipes 11, 12 are arranged so that a free circulation of oil is obtained between the bearing housings as a result of the differences in temperature of the oil. The orifice of the oil pipe 11 at the end D is arranged in the proximity of the oil surface of the oil sump of the end D, near the lower part of the rim of the oil scraper ring (part 13 in Figure 2) of the bearing 4, and the orifice of the oil pipe 11 at the end N is arranged in the proximity of the bottom of the oil sump of the end N. The orifices are at least partly immersed in oil. The relatively hot oil located in the proximity of the oil surface of the end D is thus able to flow freely in the direction of the arrow to the proximity of the bottom of the oil sump of the end N, wherein is located relatively cold oil, which warms up as a result of said oil flow. Correspondingly, the orifice of the oil pipe 12 at the end N is arranged in the proximity of the oil surface of the oil sump of the end N, near to the lower part of the rim of the oil scraper ring of the bearing 2, and the orifice of the oil pipe at the end D is arranged in the proximity of the bottom of the oil sump of the end D, whereby the relatively hot oil located in the proximity of the oil surface of the oil sump of the end N is able to flow freely through the pipe 12 in the direction of the arrow to the proximity of the bottom of the oil sump of the end D, wherein is located relatively cold oil, which warms up as a result of said oil flow. Oil flows simultaneously in the pipes 11 and 12, and in both bearing spaces of the bearing housings 9, 10, the relatively cold oil moves upwards to cool a corresponding bearing 2, 4. The described lubrication system evens out the differences in temperature of the end D and the end N.

It is apparent from Figure 2 that at the end D of the electric motor, the orifice of the second pipe 12 is smaller than the orifice of the first pipe 11, i.e. the orifice located near the bottom of the oil sump is smaller than the orifice located near the oil level 14 of the oil sump. Correspondingly, the orifice of the first pipe 11 at the end N of the electric motor is smaller than the orifice of the second pipe. The pipes 11, 12 could alternatively be narrowed in diameter farther from the orifices which are disposed at the lower parts of the bearing housings 9, 10.

In the case of the squirrel-cage motor mentioned at the beginning of the text, it was possible to reduce the temperature of the end D from a temperature of 78.5 °C to a temperature of 63.2 °C in the construction of Figure 1, the warming up of the end D thus being only 39.7 °C. The difference in temperature between the end D and the end N was only 4 °C.

If the direction of rotation of the rotor is opposite to that described for the embodiment of Figures 1 and 2, the oil pipes 11, 12 with their orifices would be disposed on the opposite side of the motor frame. It has been noticed that the bearing 4 of the end D can be cooled more efficiently when the orifices of the oil pipes, especially the orifices located uppermost in each bearing housing 9, 10, are disposed in the mentioned manner in relation to the direction of rotation of the rotor.

Figure 3, in which reference numerals corresponding to those used in Figure 1 are employed for corresponding components, shows an embodiment wherein the oil flow between the oil sumps of the bearing housings 9', 10' is implemented in a forced manner by means of a pump 15'. The pump 15' is mounted in series with a first pipe 11'. When the lubrication system is in operation, the orifice of the pipe 11' at the end D or 5' feeds relatively cold oil arriving from the orifice of the pipe located at the end N or 3' to a bearing 4' by means of the pump 15', the orifice at the end N being located significantly lower than the oil surface of the oil sump of the end N. The oil is fed into the area of the oil scraper ring of the bearing 4'. The oil scraper ring is of the same type as in Figure 2. The feed can be implemented by arranging the orifice of the pipe 11' at the end D near the oil scraper ring, but alternatively and preferably, the orifice is located considerably higher in the oil sump of the oil frame 10', for instance entirely above the oil scraper ring, because the cooling is thus rendered very efficient. It is recommended that the orifice of the pipe 11' at the end N be located near the bottom of the oil sump of the oil frame 9', where the oil is coldest. An oil pipe 12' also connects the oil sumps of the end N and the end D with each other. The orifice of the oil pipe 12' at the end D or 5' is arranged at or below the oil level of the oil sump of the oil frame 10', near the lower part of the rim of the oil scraper ring. The orifice of the oil pipe 12' at the end N is arranged near the lower part of the rim of the oil scraper ring of the oil sump of the oil frame 9'. Through the oil pipe 12', the oil is able to freely flow from the end D to the end N as indicated by the arrows, the oil levels of the oil frames 10' and 9' thus also remaining the same. The diameter of the oil pipe 12' is considerably larger than that of the oil pipe 11'.

In the case of the squirrel-cage motor mentioned at the beginning of the text, when the direction of rotation of the rotor is anti-clockwise as seen from the end of the shaft 8', it was possible to reduce the temperature of the end D from a temperature of 78.5 °C to a temperature of 53.7 °C, the warming up of the end D being thus only 30.2 °C. The difference in temperature between the end N and the end D was 5.3 °C, the end D being thus colder. These values were obtained when the oil flow in the pipes was about 0.9 l/min. If the direction of rotation of the rotor is clockwise as seen from the end of the shaft 8', the oil pipes 11', 12', or rather the orifices thereof, are located on the opposite side of the motor frame. This is preferable especially as regards the orifices of the oil pipe 12'.

The invention has been described above by means of only two preferred embodiments, and it is therefore noted that the details of the invention can be implemented in various ways within the scope of the appended claims. Accordingly, it is not necessary for the electric apparatus to be a ribbed squirrel-cage motor provided with a fan at one end, but the invention can be applied to electric apparatuses of several types, wherein the object is to control the problems relating to the temperature of slide bearing applications by levelling or evening the temperatures between the sliding bearings by means of passages. The number of bearing housings may be large. Naturally, the number of passages may also vary, and the location of the orifices thereof in the bearing housings may vary. In addition to pipes, hoses and practically any arrangements by which oil can be conducted from a bearing housing into another can act as passages.

## Claims

1. An electric apparatus journalled by means of slide bearings, comprising an end N (3) at which is located a fan and an end D (5) at which is located a shaft, and a rotor, one end of which is journalled by means of a first slide bearing (2) at the end N, and the opposite end of which is journalled by means of a second slide bearing (4) at the end D, the end N being provided with a first bearing housing (9) with an oil sump for the first slide bearing and the end D being provided with a second bearing housing (10) with an oil sump for the second slide bearing, **characterized** by a passage system (11, 12) which connects the oil sumps of the end N and the end D to enable the oil located in the oil sumps to circulate between the end N (3) and the end D (5), said passage system comprising a first passage (11) comprising an orifice at the end D (5) and an orifice at the end N (3), the orifice at the end D being disposed in the vicinity of the oil surface of the oil sump of the end D, and the orifice at the end N being disposed at least partly in an area below the oil surface of the oil sump of the end N; and a second passage (12) comprising an orifice at the end N and an orifice at the end D, the orifice at the end N being disposed at least partly in the vicinity of the oil surface of the oil sump of the end N, and the orifice at the end D being disposed in an area below the oil surface of the oil sump of the end D, the oil circulation being thus implemented with free circulation.

2. An electric apparatus according to claim 1, **characterized** in that the orifice of the second passage (12) located in the vicinity of the oil surface of the oil sump of the end N (3) is arranged at the same level with the lower part of the rim of an oil scraper ring of the first slide bearing (2), and that the orifice of the first passage (11) located in the vicinity of the oil surface of the oil sump of the end D (5) is arranged at the same level with the lower part of the rim of an oil scraper ring (13) of the second slide bearing (4).

3. An electric apparatus according to claim 1, **characterized** in that the orifice of the first passage (11) at the end N (3) is located in the vicinity of the bottom of the oil sump of the end N, and the orifice of the second passage (12) at the end D (5) is located in the vicinity of the bottom of the oil sump of the end D.

4. An electric apparatus according to claim 2 or 3, **characterized** in that the diameter of the orifice of the first passage (11) at the end N (3) is smaller than the diameter of the orifice of the second passage (12) at the end N (3), and that the diameter of the orifice of the second passage (12) at the end D (5) is smaller than the diameter of the orifice of the first passage at the end D.

5. An electric apparatus journalled by means of slide bearings, comprising an end N (3') at which is located a fan and an end D (5') at which is located a shaft, and a rotor, one end of which is journalled by means of a first slide bearing (2') at the end N, and the opposite end of which is journalled by means of a second slide bearing (4') at the end D, the end N being provided with a first bearing housing (9) with an oil sump for the first slide bearing and the end D being provided with a second bearing housing (10) with an oil sump for the second slide bearing, **characterized** by a passage system (11', 12') which connects the oil sumps of the end N and the end D to enable the oil located in the oil sumps to circulate between the end N (3') and the end D (5'), a pump for circulating oil in the passage system being provided, said passage system comprising a first passage (11') with an orifice at the end D (5') and an orifice at the end N (3') being arranged to feed oil arriving from the end N to the vicinity of the oil surface of the oil sump of the end D, and the orifice at the end N being disposed in an area below the oil surface of the oil sump of the end N; and a second passage (12') comprising an orifice at the end N and an orifice at the end D, the orifice at the end N being arranged to feed oil arriving from the end D to the vicinity of the oil surface of the oil sump of the end N, and the orifice at the end D being disposed in the vicinity of the oil surface of the oil sump of the end D.

6. An electric apparatus according to claim 5, **characterized** in that the orifice of the first passage (11') at the end N (3') is located in the vicinity of the bottom of the oil sump of the end N, and that the orifice of the second passage (12') at the end D (5') is located below the orifice of the first passage at the end D.

7. An electric apparatus according to claim 5, **characterized** in that the orifice of the second passage (12') at the end N (3') is arranged to feed oil to the lower part of the rim of an oil scraper ring of the first slide bearing (2') located at the end N, and that the orifice of the first passage (11') at the end D (5') is arranged to feed oil to above the oil level of the oil sump (9') of the end D, to the lower part of the rim of an oil scraper ring of the second slide bearing (4').

8. An electric apparatus according to claim 5, **characterized** in that the pump (15') is arranged at the first passage (11').

9. An electric apparatus according to claim 5, **characterized** in that the diameter of the first passage (11') is smaller than the diameter of the second passage (12').

## Patentansprüche

1. Elektrisches Gerät, durch Gleitlager gelagert, mit einem Ende N (3), an dem sich ein Lüfter befindet, und einem Ende D (5), an dem sich eine Welle befindet, und einem Rotor, von dem ein Ende durch ein erstes Gleitlager (2) am Ende N gelagert ist und das gegenüberliegende Ende durch ein zweites Gleitlager (4) am Ende D gelagert ist, wobei das Ende N mit einem ersten Lagergehäuse (9) mit einem Ölsumpf für das erste Gleitlager versehen ist und das Ende D mit einem zweiten Lagergehäuse (10) mit einem Ölsumpf für das zweite Gleitlager versehen ist, **gekennzeichnet durch** ein Kanalsystem (11, 12), das die Ölsümpfe des Endes N und des Endes D verbindet, um zu ermöglichen, daß das in den Ölsümpfen befindliche Öl zwischen dem Ende N (3) und dem Ende D (5) umläuft, welches Kanalsystem einen ersten Kanal (11) mit einer Mündung am Ende D (5) und einer Mündung am Ende N (3) aufweist, wobei die Mündung am Ende D in der Nähe der Öloberfläche des Ölsumpfes des Endes D angeordnet ist und die Mündung am Ende N zumindest teilweise in einem Bereich unterhalb der Öloberfläche des Ölsumpfes des Endes N angeordnet ist; und einen zweiten Kanal (12) mit einer Mündung am Ende N und einer Mündung am Ende D, wobei die Mündung am Ende N zumindest teilweise in der Nähe der Öloberfläche des Ölsumpfes des Endes N angeordnet ist und die Mündung am Ende D in einem Bereich unterhalb der Öloberfläche des Ölsumpfes des Endes D angeordnet ist, wobei so das Öl frei umläuft.

2. Elektrisches Gerät nach Anspruch 1, dadurch gekennzeichnet, daß die in der Nähe der Öloberfläche des Ölsumpfes des Endes N (3) gelegene Mündung des zweiten Kanals (12) auf gleicher Höhe mit dem unteren Teil der Rippe eines Ölabstreifrings des ersten Gleitlagers (2) angeordnet ist und daß die in der Nähe der Öloberfläche des Ölsumpfes des Endes D (5) gelegene Mündung des ersten Kanals (11) auf gleicher Höhe mit dem unteren Teil der Rippe eines Ölabstreifrings (13) des zweiten Gleitlagers (4) angeordnet ist.

3. Elektrisches Gerät nach Anspruch 1, dadurch gekennzeichnet, daß sich die Mündung des ersten Kanals (11) am Ende N (3) in der Nähe des Bodens des Ölsumpfes des Endes N befindet und sich die Mündung des zweiten Kanals (12) am Ende D (5) in der Nähe des Bodens des Ölsumpfes des Endes D befindet.

4. Elektrisches Gerät nach Anspruch 2 oder 3, dadurch gekennzeichnet, daß der Durchmesser der Mündung des ersten Kanals (11) am Ende N (3) kleiner als der Durchmesser der Mündung des zweiten Kanals (12) am Ende N (3) ist und daß der Durchmesser der Mündung des zweiten Kanals (12) am Ende D (5) kleiner als der Durchmesser des ersten Kanals am Ende D ist.

5. Elektrisches Gerät, durch Gleitlager gelagert, mit einem Ende N (3'), an dem sich ein Lüfter befindet, und einem Ende D (5'), an dem sich eine Welle befindet, und einem Rotor, von dem ein Ende durch ein erstes Gleitlager (2') am Ende N gelagert ist und das gegenüberliegende Ende durch ein zweites Gleitlager (4') am Ende D gelagert ist, wobei das Ende N mit einem ersten Lagergehäuse (9) mit einem Ölsumpf für das erste Gleitlager versehen ist und das Ende D mit einem zweiten Lagergehäuse (10) mit einem Ölsumpf für das zweite Gleitlager versehen ist, **gekennzeichnet durch** ein Kanalsystem (11', 12'), das die Ölsümpfe des Endes N und des Endes D verbindet, um zu ermöglichen, daß das in den Ölsümpfen befindliche Öl zwischen dem Ende N (3') und dem Ende D (5') umläuft, wobei eine Pumpe vorgesehen ist, um Öl im Kanalsystem umlaufen zu lassen, welches Kanalsystem einen ersten Kanal (11') mit einer Mündung am Ende D (5') und einer Mündung am Ende N (3') aufweist, der so angeordnet ist, das er vom Ende N ankommendes Öl in die Nähe der Öloberfläche des Ölsumpfes des Endes D zuführt, und wobei die Mündung am Ende N in einem Bereich unterhalb der Öloberfläche des Ölsumpfes des Endes N angeordnet ist; und einen zweiten Kanal (12') mit einer Mündung am Ende N und einer Mündung am Ende D, wobei die Mündung am Ende N angeordnet ist, um vom Ende D ankommendes Öl in die Nähe der Öloberfläche des Ölsumpfes des Endes N zuzuführen, und die Mündung am Ende D in der Nähe der Öloberfläche des Ölsumpfes des Endes D angeordnet ist.

6. Elektrisches Gerät nach Anspruch 5, dadurch gekennzeichnet, daß sich die Mündung des ersten Kanals (11') am Ende N (3') in der Nähe des Bodens des Ölsumpfes des Endes N befindet und daß sich die Mündung des zweiten Kanals (12') am Ende D (5') unter der Mündung des ersten Kanals am Ende D befindet.

7. Elektrisches Gerät nach Anspruch 5, dadurch gekennzeichnet, daß die Mündung des zweiten Kanals (12') am Ende N (3') angeordnet ist, um Öl zum unteren Teil der Rippe eines Ölabstreifrings des am Ende N gelegenen ersten Gleitlagers (2') zuzuführen, und daß die Mündung des ersten Kanals (11') am Ende D (5') angeordnet ist, um Öl oberhalb des Ölpegels des Ölsumpfes (9') des Endes D zum unteren Teil der Rippe eines Ölabstreifrings des zweiten Gleitlagers (4') zuzuführen.

8. Elektrisches Gerät nach Anspruch 5, dadurch gekennzeichnet, daß die Pumpe (15') am ersten Kanal (11') angeordnet ist.

9. Elektrisches Gerät nach Anspruch 5, dadurch gekennzeichnet, daß der Durchmesser des ersten Kanals (11') kleiner als der Durchmesser des zweiten Kanals (12') ist.

## Revendications

1. Appareil électrique supporté par des paliers lisses, comportant une extrémité N (3) à laquelle se trouve un ventilateur et une extrémité D (5) à laquelle se trouve un arbre, et un rotor dont une première extrémité est supportée par un premier palier lisse (2) à l'extrémité N et dont l'extrémité opposée est supportée par un deuxième palier lisse (4) à l'extrémité D, l'extrémité N comportant un premier logement (9) de palier avec un carter d'huile pour le premier palier lisse et l'extrémité D comportant un deuxième logement (10) de palier avec un carter d'huile pour le deuxième palier lisse, **caractérisé** par un système de passages (11, 12) qui relie les carters d'huile de l'extrémité N et de l'extrémité D pour permettre à l'huile présente dans les carters d'huile de circuler entre l'extrémité N (3) et l'extrémité D (5), ledit système de passage comprenant un premier passage (11) qui comporte un orifice à l'extrémité D (5) et un orifice à l'extrémité N (3), l'orifice à l'extrémité D étant disposé au voisinage de la surface de l'huile du carter d'huile de l'extrémité D, et l'orifice à l'extrémité N étant disposé au moins partiellement dans une zone sous la surface de l'huile du carter d'huile de l'extrémité N; et un second passage (12) qui comporte un orifice à l'extrémité N et un orifice à l'extrémité D, l'orifice à l'extrémité N étant disposé au moins partiellement au voisinage de la surface de l'huile du carter d'huile de l'extrémité N, et l'orifice à l'extrémité D étant disposé dans une zone sous la surface de l'huile du carter d'huile de l'extrémité D, la circulation de l'huile étant ainsi réalisée avec une circulation libre.

2. Appareil électrique selon la revendication 1, **caractérisé** en ce que l'orifice du second passage (12) situé au voisinage de la surface de l'huile du carter d'huile de l'extrémité N (3) est ménagé au même niveau que la partie inférieure du bord d'un segment racleur d'huile du premier palier lisse (2), et en ce que l'orifice du premier passage (11) situé au voisinage de la surface de l'huile du carter d'huile de l'extrémité D (5) est ménagé au même niveau que la partie inférieure du bord d'un segment (13) racleur d'huile du deuxième palier lisse (4).

3. Appareil électrique selon la revendication 1, **caractérisé** en ce que l'orifice du premier passage (11) à l'extrémité N (3) se trouve au voisinage du fond du carter d'huile de l'extrémité N et l'orifice du second passage (12) à l'extrémité D (5) se trouve au voisinage du fond du carter d'huile de l'extrémité D.

4. Appareil électrique selon la revendication 2 ou 3, **caractérisé** en ce que le diamètre de l'orifice du premier passage (11) à l'extrémité N (3) est inférieur au diamètre de l'orifice du second passage (12) à l'extrémité N (3), et en ce que le diamètre de l'orifice du deuxième passage (12) à l'extrémité D (5) est inférieur au diamètre de l'orifice du premier passage à l'extrémité D.

5. Appareil électrique supporté par des paliers lisses, comportant une extrémité N (3') à laquelle se trouve un ventilateur et une extrémité D (5') à laquelle se trouve un arbre, et un rotor dont une première extrémité est supportée par un premier palier lisse (2') à l'extrémité N et dont l'extrémité opposée est supportée par un deuxième palier lisse (4') à l'extrémité D, l'extrémité N comportant un premier logement (9) de palier avec un carter d'huile pour le premier palier lisse et l'extrémité D comportant un deuxième logement (10) de palier avec un carter d'huile pour le deuxième palier lisse, **caractérisé** par un système de passages (11', 12') qui relie les carters d'huile de l'extrémité N et de l'extrémité D pour permettre à l'huile présente dans les carters d'huile de circuler entre l'extrémité N (3') et l'extrémité D (5'), une pompe pour faire circuler de l'huile dans le système de passages étant présente, ledit système de passages comprenant un premier passage (11'), un orifice à l'extrémité D (5') et un orifice à l'extrémité N (3') étant agencés pour faire circuler de l'huile arrivant de l'extrémité N jusqu'au voisinage de la surface de l'huile du carter d'huile de l'extrémité D, et l'orifice à l'extrémité N étant disposé dans une zone sous la surface de l'huile du carter d'huile de l'extrémité N; et un second passage (12') comportant un orifice à l'extrémité N et un orifice à l'extrémité D, l'orifice à l'extrémité N étant agencé pour faire circuler de l'huile arrivant de l'extrémité D jusqu'au voisinage de la surface de l'huile du carter d'huile de l'extrémité N, et l'orifice à l'extrémité D étant disposé au voisinage de la surface de l'huile du carter d'huile de l'extrémité D.

6. Appareil électrique selon la revendication 5, **caractérisé** en ce que l'orifice du premier passage du premier passage (11') à l'extrémité N (3') se trouve au voisinage du fond du carter d'huile de l'extrémité N et en ce que l'orifice du second passage (12') à l'extrémité D (5') se trouve sous l'orifice du premier passage à l'extrémité D.

7. Appareil électrique selon la revendication 5, **caractérisé** en ce que l'orifice du second passage (12') à l'extrémité N (3') est agencé pour faire circuler de l'huile jusqu'à la partie inférieure du bord d'un segment racleur d'huile du premier palier lisse (2') situé à l'extrémité N, et en ce que l'orifice du premier passage (11') à l'extrémité D (5') est agencé pour faire circuler de l'huile jusqu'au-dessus du niveau de l'huile du carter (9') d'huile de l'extrémité D, jusqu'à la partie inférieure du bord d'un segment racleur d'huile du deuxième palier lisse (4')

8. Appareil électrique selon la revendication 5, **caractérisé** en ce que la pompe (15') est disposée au niveau du premier passage (11')

9. Appareil électrique selon la revendication 5, **caractérisé** en ce que le diamètre du premier passage (11') est inférieur au diamètre du second passage (12').
